(19) Europäisches Patentamt

European Patent Office

Office européen des brevets

(11)  **EP 1 077 534 B1**

(12)  **EUROPEAN PATENT SPECIFICATION**

(45) Date of publication and mention
of the grant of the patent:
**12.12.2001  Bulletin 2001/50**

(51) Int Cl.⁷: **H04B 7/005**

(21) Application number: **99402063.4**

(22) Date of filing: **16.08.1999**

(54) **A method for reporting transmit power usage in a variable bit rate mobile radiocommunication system**

Verfahren zur Meldung der Sendeleistung in einem Funkkommunikationssystem mit variabler Bitrate

Procédé pour rapporter la consommation de puissance d'emission d'un système de radiocommunication à débit binaire variable

(84) Designated Contracting States:
**AT BE CH CY DE DK ES FI FR GB GR IE IT LI LU MC NL PT SE**

(43) Date of publication of application:
**21.02.2001  Bulletin 2001/08**

(73) Proprietor: **ALCATEL**
**75008 Paris (FR)**

(72) Inventor: **Blanc, Patrick**
**92130 Issy les Moulineaux (FR)**

(74) Representative: **El Manouni, Josiane et al**
**COMPAGNIE FINANCIERE ALCATEL**
**Dépt. Propr. Industrielle,**
**30, avenue Kléber**
**75116 Paris (FR)**

(56) References cited:
**WO-A-98/13951**          **WO-A-98/35514**
**WO-A-98/45966**          **WO-A-98/56120**

**Description**

The present invention is generally concerned with mobile radiocommunication systems.

The present invention is in particular applicable to mobile radiocommunication systems of CDMA ("Code Division Multiple Access") type. In particular, the present invention is applicable to UMTS ("Universal Mobile Telecommunication System").

In radio mobile systems, in particular of CDMA type, it is useful to have some regular or event-triggered reports of the transmit power being used, in both uplink and downlink direction. This information may be used by radio resource control algorithms such as radio admission control or radio resource allocation.

For example, in UMTS, it is provided that a Node B (equivalent to a base station) reports to a RNC, or Radio Network Controller, (equivalent to a base station controller) the power transmitted in downlink on each physical channel (or channelisation code), or that a UE, or User Equipment, (equivalent to a mobile station), reports to a RNC its power transmitted in uplink on an allocated physical channel.

Such a reporting could be implemented in a very simple fashion, by providing measuring or surveying of the transmitted power in a Node B, or in a UE, and reporting it to the RNC.

However, when the system implements a variable bit rate capability controlled at the physical and/or MAC ("Medium Access Control") layer, such as is the case with the UMTS system, such a reporting is not as simple. Since the physical layer of UMTS implements variable bit rate, the transmit power directly depends on the actual bit rate. When services are very bursty, which may be the case for most of UMTS services, this may have a large impact on the accuracy of measurements, and on the possibility to exploit these measurements.

WO 98/35514 discloses a method for downlink rate scheduling. In this reference it is mentioned that, for each scheduling period, the base station controller knows the prior transmit power and the prior transmission rate for each scheduled user (these two measurements being used to calculate a prior energy-per-bit, for prediction and scheduling purpose). Therefore in this reference no report of the transmission power is provided from a base station to the base station controller. The same applies to WO98/45966 which discloses a method for uplink rate scheduling: no report of transmission power is provided from mobile stations to the base station controller.

Besides, in systems such as the UMTS system wherein a reporting of transmit power is provided, for example from Node B to RNC for downlink transmission power usage, using such reported transmit powers together with transmission rates as known by the RNC would raise problems such as synchronisation between both measurements, as well as, as recognized by the present invention, possible differences between the transmission rate as known by the base station controller, and the actual transmission rate as transmitted by the base station. In particular, as recognized by the present invention, some data transmitted by the base station controller to the base station might be discarded by the base station in case of overload conditions at the base station, which could not be done at the base station controller. This could in particular be the case during periods of high activity in real time traffic (typically voice traffic) which could not be taken into account by the base station controller in scheduling non real time data traffic.

Therefore there is a need for an effective solution for reporting transmit power usage in a variable bit rate mobile radiocommunication system.

An object of the present invention is a method for reporting transmit power usage in a variable bit rate mobile radiocommunication system, said method including a joint report of transmit power and transmitted bit rate.

According to another object of the present invention, said method applies to downlink transmission, and said reporting is from a base station to a base station controller.

According to another object of the present invention, said method applies to uplink transmission, and said reporting is from a mobile station to a base station controller.

According to another object of the present invention, said reported transmit power is averaged over a given period of time.

According to another object of the present invention, said reported transmitted bit rate is reported as a number of transmitted bits in a given period of time.

According to another object of the present invention, said given period of time is a multiple of a data unit, or Transport Block, repetition period.

Another object of the present invention is a mobile station for reporting transmit power usage in uplink, said mobile station including:

- means for recording a transmit power to be reported, as a transmit power averaged over a given period of time,
- means for recording a transmitted bit rate to be reported, as a number of transmitted bits in said given period of time,
- means for reporting said transmit power together with said transmitted bit rate.

Another object of the present invention is a base station for reporting transmit power usage in downlink, said base station including:

- means for recording a transmit power per physical channel allocated to each user, to be reported as a transmit power averaged over a given period of time,
- means for recording a transmitted bit rate per physical channel allocated to each user, to be reported as a number of transmitted bits in said given period of time,

- means for reporting said transmit power together with said transmitted bit rate.

Another object of the present invention is a base station controller for reporting transmit power usage in uplink, said base station controller including:

- means for requesting a mobile station to jointly report a transmit power and a transmitted bit rate,
- means for receiving said joint report from said mobile station.

Another object of the present invention is a base station controller for reporting transmit power usage in downlink, said base station controller including:

- means for requesting a base station to jointly report a transmit power and a transmitted bit rate, for each physical channel allocated to each user,
- means for receiving said joint report from said base station.

The present invention also has for its object the application of such a reporting method, to overload detection in downlink in a variable rate mobile radiocommunication system, including:

- in a base station controller of said system, recording a bit rate, as transmitted to a base station,
- in said base station, jointly reporting to said base station controller a transmit power and a transmitted bit rate,
- in said base station controller, comparing a transmitted bit rate as transmitted to said base station, with a transmitted bit rate as reported by said base station , to detect an overload in said base station.

These and other objects of the present invention will become more apparent from the following description taken in conjunction with the accompanying drawings:

- figures 1, 2 and 3 are diagrams intended to recall the structure of data exchanged between Layer 1 or physical layer, and Layer 2 or MAC layer, in a system such as UMTS for example,
- figure 4 is a diagram intended to illustrate a method according to the invention, as applied to uplink transmission,
- figure 5 is a diagram intended to illustrate a method according to the invention, as applied to downlink transmission.

As an example, the following description will be made for the case of the UMTS system; nevertheless it should be understood that this invention is not limited to such a system.

In UMTS system, as disclosed for example in '3GPP RAN TS 25.302 : Services provided by the physical layer', version 2.4.0, July 1999, at each Transmission Time Interval TTI, the MAC layer sends a Transport Block Set to the physical layer, to be transmitted on a particular channelisation code. This Transport Block Set is sent together with a TFI indicator ("Transport Format Indicator"), which includes an information on the number of bits being transmitted.

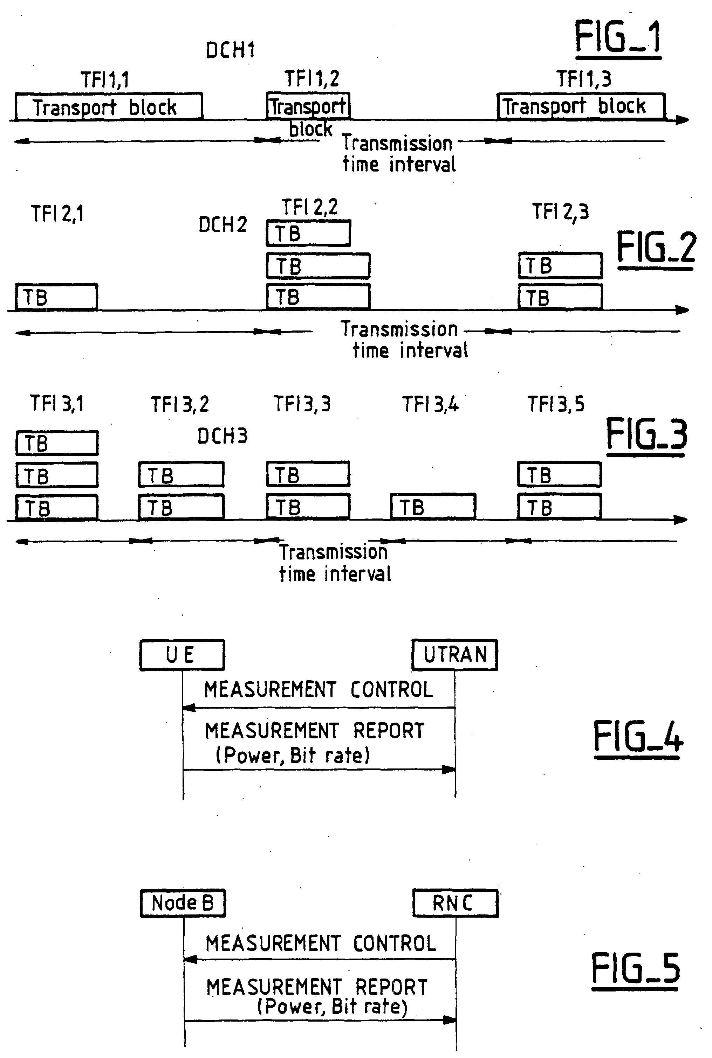

As recalled in figures 1, 2 and 3, each Transport Block Set comprises a number of Transport Blocks TB; in figure 1 the Transport Block size is varied from one Transmission Time Interval TTI to another one, while the Transport Block Set size is fixed; in figure 2 or 3, on the contrary, the Transport Block size is fixed, while the Transport Block Set size is varied from one Transmission Time Interval TTI to another one.

In case several transport channels are multiplexed onto the same physical channel (code or CCTrCH : "Code Composite Transport Channel"), several Transport Block Sets may be sent to the physical layer at each Transmission Time Interval TTI, each with its TFI field.

The physical layer performs some channel coding and rate matching algorithm in order to adapt the information rate received from the MAC layer to the transmission bit rate on the radio interface. Then it sends the Transport Blocks on the radio interface on a Transmission Time Interval (TTI) basis, applying a slot by slot power control algorithm at each TTI.

In such a system, the present invention provides a joint report of transmit power and transmitted bit rate.

This may for example be implemented as follows.

At each transmission time interval TTI the physical layer records the number of information bits transmitted. This information is obtained from the sum of Transport Block Set sizes for each transport channel (or Dedicated Channel, DCH) multiplexed on the same physical channel (or code). The Transport Block Set size is itself obtained from the TFI bits and the Transport Format definition. The physical layer also records the averaged transmit power used on that Transmission Time Interval TTI. This transmit power depends on the power control commands received from a power control algorithm, at each time slot of a Transmission time Interval TTI.

When no Transport Blocks are transmitted for a given Transmission Time Interval, but a signalling channel (DPCCH, or Dedicated Physical Control Channel) is kept on the physical layer to maintain synchronisation, the transmit power sent on that signalling channel may be counted in the averaging, together with a null transmitted information bit rote.

In downlink, in case the Node B discards some transport blocks sent by the MAC layer in order to reduce the load for instance (as already pointed out), these Transport Blocks are of course not counted in the averaging scheme. Further, the report of the actually transmitted bit rate may permit the RNC to detect some overload situations in the Node B, by comparing the amount of data sent from MAC layer (RNC) to physical layer L1 (Node B), with the actual report from Node B. Such a new feature is therefore allowed by the reporting method according to the present invention.

From the joint report of transmit power and transmitted bit rate, the RNC can then compute the energy per user information transmitted bit as :

$$E_{TTI} = (TxPower_{TTI} / BitsNb_{TTI}) * TTI$$

where:

$BitsNb_{TTI}$ is the number of bits transmitted at Transmission Time Interval TTI

$TxPower_{TTI}$ is the averaged transmit power on Transmission Time Interval TTI.

This quantity may then be averaged over a longer period, which can be set by the upper layers, or RRC ("Radio Resource Control"). Alternatively, both transmit power and number of bits can be averaged over the same period T, and the averaged energy can be evaluated from their mean value (the same result would of course be obtained) :

$$E_T = (Power_T / BitsNb_T) * T$$

where:

$BitsNb_T$ is the number of bits transmitted over period T

$TxPower_T$ is the transmit power averaged over period T.

A reporting method according to the present invention may be implemented for both uplink and downlink transmissions, on DCH ("Dedicated CHannel"). It may also be implemented for the DSCH ("Downlink Shared Channel") in downlink, and could as well be extended to FACH ("Forward Access CHannel ").

For uplink transmission, the main signalling requirement for implementing a reporting method according to the present invention is on the Uu interface (or radio interface between UE and UTRAN ("UMTS Terrestrial Radio Acess Network")), and impacts the UE measurements reports at the RRC layer.

The UE measurement procedures on Uu interface for a variety of measurements are defined in '3GPP RAN TS 25.331 : RRC protocol specifications', version 1.1.0, June 1999, by some RRC measurement control and measurements reports procedures, as illustrated in figure 4. The measurement control messages permit the UTRAN to control the type of measurement to report, the reporting criteria. The measurement report procedures are used by the UE to report the requested measurements .

According to the present invention, for uplink transmission, the UE may for example be requested to measure and report the following quantities :

- Transmission power used on uplink in dBm, over a given period T, multiple of the Transmission Time interval (TTI)
- Transmission bit rate in kbit/s, measured over the same period T. This quantity may be reported in logarithmic scale with a resolution of 0.1 in log scale. $BitRate_{log} = log_{10}(BitNb / T )$.

Both quantities may be reported together in the same measurement report from UE to UTRAN, as illustrated in figure 4 where these quantities are respectively noted Power and BitRate.

For downlink transmission, the main signalling requirement for implementing a reporting method according to the present invention is on the lub interface (or interface between Node B and RNC).

The Node B measurement procedures on lub interface for a variety of measurements are described in '3GPP RAN TS 25.433 : NBAP specifications', version 1.0.2, July 1999. They are described in a similar way as for the uplink measurements procedures. This is illustrated in figure 5. Alternatively, the measurement reports may be transmitted in the user plane of the lub and lur (between Node B and RNC), but the same measurement report scheme could be applied in this case.

Power measurements are performed on each channelisation code, which can support either one or several transport channels ( or Dedicated Channels DCHs), or one DSCH (Downlink Shared Channel) transport channel.

According to the present invention, for downlink transmission, the Node B may for example be requested to measure and report the following quantities :

- Transmission power used on each channelisation code in downlink, in dBm, over a given period T, multiple of the Transmission Time interval (TTI)
- Transmission bit rate on this channelisation code, in kbit/s, $BitRate_{log} = log_{10}(BitNb /T)$.

Both quantities may be reported together in the same measurement report from Node B to RNC, as illustrated in figure 5 where these quantities are also respectively noted Power and BitRate.

For downlink transmission, this measurement report may also include a time reference (for example cell frame number), indicating when the averaging period has finished. It is assumed that the averaging period has been exchanged between RNC and Node B in the measurement control procedure. The timing information allows the RNC to compare the transmitted bit rate with the one scheduled by MAC over the same time period, and therefore to detect overload sitauations in Node B, as already pointed out.

These measurement reports can be used in many different ways by the radio resource management functions in the RNC. Some examples are given below, but should not be considered as exhaustive:

- Scheduling algorithm in downlink:

These measurements reports can be used to implement an optimal scheduling algorithm, in MAC layer (MAC-d for DCH channels, or MAC-sh for the DSCH channel).

The RNC shall know the total transmit power that can be transmitted by each Node B, according to the actual traffic load.

From the measurements reports sent by the Node B, the RNC can know the actual transmit power required for each UE, as a function of their bit rate. It can then schedule the optimal number of transport blocks for each UE in order to reach without exceeding the total amount of power that can be transmitted by the Node B. The algorithm may be as follows:

At each TTI, choose the bit rate for each UE so that :

$$\sum_{active\ user\ i} BitNb_i \cdot E_{T,i} \le Pt_{max}(load)$$

where

BitNb$_i$ is the number of bits that can be transmitted for this UE$_i$ at the next TTI
E$_{T,i}$ is the averaged energy for UE$_i$ as reported by Node B over the previous measurement period, as defined above : E$_{T,i}$ = (Power$_T$ / BitNb$_T$) * T
Pt$_{max}$(load) is the maximum power that can be transmitted by the

Node B in this cell, according to the actual traffic load in this cell and in neighbouring cells. This quantity is regularly evaluated by the Node B, according to some interference and quality statistics measurements.

This algorithm may be implemented as a centralised scheduling algorithm for all MAC-d controlling DCH for each UE, or as the scheduling algorithm in MAC-sh for the DSCH.

- Overload detection in downlink:

The report of the actually transmitted bits in the Node B for each UE may allow the RNC to detect some overload conditions in the Node B. Indeed, the RNC schedules the transmission of transport blocks from MAC to L1 at each TTI, and may then record the transmission bit rate over a given period. When receiving the measurement reports from Node B on that period, it can then compare the recorded transmission bit rate with the effective transmitted bit rate to detect the ratio of dropped frames. The accuracy of this detection will of course depend on the resolution of measurements reports.

- Scheduling control in uplink:

The measurement reports of transmission power and actual bit rate for each UE in uplink may permit to the RNC to control more optimally the scheduling of uplink transmission. In case a centralised scheduling algorithm would be implemented, such as for the USCH ("Uplink Shared Channel"), this would enable a similar algorithm as the one being proposed for the downlink transmission, to be implemented in the RNC.

**Claims**

1. A method for reporting transmit power usage in a variable bit rate mobile radiocommunication system, said method including a joint report of transmit power and transmitted bit rate.

2. A method according to claim 1, wherein said method applies to downlink transmission, and said reporting is from a base station (Node B) to a base station controller (RNC).

3. A method according to claim 1, wherein said method applies to uplink transmission, and said reporting is from a mobile station (UE) to a base station controller (RNC).

4. A method according to any of claims 1 to 3, wherein said reported transmit power is averaged over a given period of time.

5. A method according to any of claims 1 to 3, wherein said reported transmitted bit rate is reported as a number of transmitted bits in a given period of time.

6. A method according to any of claims 4 and 5, wherein said given period of time is a multiple of a data unit, or Transport Block, repetition period.

7. A mobile station (UE) for implementing a method according to any of claims 1 to 5 for reporting transmit power usage in uplink, said mobile station including:

- means for recording a transmit power to be reported, as a transmit power averaged over a given period of time,

- means for recording a transmitted bit rate to be reported, as a number of transmitted bits in said given period of time,
- means for reporting said transmit power together with said transmitted bit rate.

8. A base station (Node B) for implementing a method according to any of claims 1 to 5 for reporting transmit power usage in downlink, said base station including:

   - means for recording a transmit power per physical channel allocated to each user, to be reported as a transmit power averaged over a given period of time,
   - means for recording a transmitted bit rate per physical channel allocated to each user, to be reported as a number of transmitted bits in said given period of time,
   - means for reporting said transmit power together with said transmitted bit rate.

9. A base station controller (RNC) for implementing a method according to any of claims 1 to 5 for reporting transmit power usage in uplink, said base station controller including:

   - means for requesting a mobile station (UE) to jointly report a transmit power and a transmitted bit rate,
   - means for receiving said joint report from said mobile station.

10. A base station controller (RNC) for implementing a method according to any of claims 1 to 5 for reporting transmit power usage in downlink, said base station controller including:

    - means for requesting a base station (Node B) to jointly report a transmit power and a transmitted bit rate, for each physical channel allocated to each user,
    - means for receiving said joint report from said base station.

11. A method for overload detection in downlink in a variable rate mobile radiocommunication system, including:

    - in a base station controller (RNC) of said system, recording a bit rate, as transmitted to a base station (Node B),
    - in said base station, jointly reporting to said base station controller a transmit power and a transmitted bit rate,
    - in said base station controller, comparing a transmitted bit rate as transmitted to said base station, with a transmitted bit rate as reported by said base station , to detect an overload in said base station.

**Patentansprüche**

1. Verfahren zum Melden der genutzten Sendeleistung in einem Funk-Kommunikationsystem mit variabler Bitrate, welches eine gemeinsame Meldung der Sendeleistung und der übertragenen Bitrate umfasst.

2. Verfahren nach Anspruch 1, bei dem das Verfahren auf die Abwärtsrichtungsübertragung angewandt wird und die Meldung von einer Basisstation (Node B) an einen Basisstationscontroller (RNC) erfolgt.

3. Verfahren nach Anspruch 1, bei dem das Verfahren auf die Aufwärtsrichtungsübertragung angewandt wird und die Meldung von einer Mobilstation (UE) an einen Basisstationscontroller (RNC) erfolgt.

4. Verfahren nach einem der Ansprüche 1 bis 3, bei dem die gemeldete Sendeleistung über einen gegebenen Zeitraum gemittelt wird.

5. Verfahren nach einem der Ansprüche 1 bis 3, bei dem die gemeldete übertragene Bitrate als Anzahl von in einem gegebenen Zeitraum übertragenen Bits gemeldet wird.

6. Verfahren nach einem der Ansprüche 4 und 5, bei dem der gegebene Zeitraum ein Mehrfaches einer Dateneinheit- oder Transportblock-Wiederholrate ist.

7. Mobilstation (UE) zur Durchführung eines Verfahrens nach einem der Ansprüche 1 bis 5 zum Melden der genutzten Sendeleistung in Aufwärtsübertragungsrichtung, mit:

   - einer Einrichtung zum Aufzeichnen einer zu meldenden Sendeleistung als über einen gegebenen Zeitraum gemittelte Sendeleistung,
   - einer Einrichtung zum Aufzeichnen einer zu meldenden Bitrate als eine Anzahl von in dem gegebenen Zeitraum übertragenen Bits,
   - einer Einrichtung zum Melden der Sendeleistung zusammen mit der übertragenen Bitrate.

8. Basisstation (Node B) zum Durchführen eines Verfahrens nach einem der Ansprüche 1 bis 5 zum Melden der genutzten Sendeleistung in Abwärtsübertragungrichtung, mit:

   - einer Einrichtung zum Aufzeichnen einer als eine über einen gegebenen Zeitraum gemittelte Sendeleistung zu meldenden Sendeleistung pro jedem Nutzer zugeteiltem physikalischen Kanal,

- einer Einrichtung zum Aufzeichnen einer als Anzahl von übertragenen Bits in dem gegebenen Zeitraum zu meldenden übertragenen Bitrate pro jedem Nutzer zugeteiltem physikalischen Kanal,
- einer Einrichtung zum Melden der Sendeleistung zusammen mit der übertragenen Bitrate.

9. Basisstationscontroller (RNC) zur Durchführung eines Verfahrens nach einem der Ansprüche 1 bis 5 zum Melden der genutzten Sendeleistung in Aufwärtsübertragungsrichtung, mit:

- einer Einrichtung zum Auffordern einer Mobilstation (UE), eine Sendeleistung und eine übertragene Bitrate gemeinsam zu melden,
- einer Einrichtung zum Empfangen der gemeinsamen Meldung von der Mobilstation.

10. Basisstationscontroller (RNC) zum Durchführen eines Verfahrens nach einem der Ansprüche 1 bis 5 zum Melden der genutzten Sendeleistung in Abwärtsübertragungrichtung mit:

- einer Einrichtung zum Auffordern einer Basisstation (Node B), eine Sendeleistung und eine übertragene Bitrate für jeden einem Benutzer zugeteilten physikalischen Kanal zu melden,
- einer Einrichtung zum Empfangen der gemeinsamen Meldung von der Basisstation.

11. Verfahren zur Überlasterfassung in Abwärtsübertragungrichtung in einem Mobilfunk-Kommunikationssystem mit variabler Bitrate, mit:

- dem Aufzeichnen einer Bitrate, wie zu einer Basisstation (Node B) übertragen, in einem Basisstationscontroller (RNC) des Systems,
- in der Basisstation gemeinsames Melden einer Sendeleistung und einer übertragenen Bitrate an den Basisstationscontroller,
- in dem Basisstationscontroller Vergleichen einer übertragenen Bitrate, wie an die Basisstation übertragen, mit einer übertragenen Bitrate, wie von der Basisstation gemeldet, um eine Überlast in der Basisstation zu erfassen.

**Revendications**

1. Procédé pour rapporter la consommation d'énergie d'émission dans un système de radiocommunication mobile à débit binaire variable, ledit procédé comprenant un rapport joint de la puissance d'émission et du débit binaire d'émission.

2. Procédé selon la revendication 1, dans lequel ledit procédé s'applique à l'émission de liaison descendante, et ledit rapport est envoyé à partir d'une station de base (noeud B) à un dispositif de commande de station de base (RNC).

3. Procédé selon la revendication 1, dans lequel ledit procédé s'applique à une émission de liaison montante, et ledit rapport est envoyé à partir d'une station mobile (UE) à un dispositif de commande de station de base (RNC).

4. Procédé selon l'une quelconque des revendications 1 à 3, dans lequel ladite puissance d'émission rapportée est la moyenne sur une période de temps donnée.

5. Procédé selon l'une quelconque des revendications 1 à 3, dans lequel ledit débit binaire d'émission rapporté, est rapporté comme un nombre de bits émis dans une période de temps donnée.

6. Procédé selon l'une quelconque des revendications 4 et 5, dans lequel ladite période de temps donnée est un multiple d'une unité de données, ou une période de répétition de bloc de transport.

7. Station mobile (UE) pour mettre en oeuvre un procédé selon l'une quelconque des revendications 1 à 5 pour rapporter la consommation de puissance d'émission dans la liaison montante, ladite station mobile comprenant :

- un moyen pour enregistrer une puissance d'émission à rapporter, en tant que puissance d'émission moyenne sur une période de temps donnée,
- un moyen pour enregistrer un débit binaire d'émission à rapporter, en tant que nombre de bits émis dans ladite période de temps donnée,
- un moyen pour rapporter ladite puissance d'émission ainsi que ledit débit binaire d'émission.

8. Station de base (noeud B) pour mettre en oeuvre un procédé selon l'une quelconque des revendications 1 à 5 pour rapporter la consommation d'énergie d'émission dans la liaison descendante, ladite station de base comprenant :

- un moyen pour enregistrer une puissance d'émission par un canal physique alloué à chaque utilisateur, à rapporter comme une puissance d'émission moyenne sur une période de temps donnée,
- un moyen pour enregistrer un débit binaire d'émission par canal physique alloué à chaque utilisateur, à rapporter comme un nombre de bits émis dans ladite période de temps donnée,
- un moyen pour rapporter ladite période d'émission ainsi que ledit débit binaire d'émission.

**9.** Dispositif de commande de station de base (RNC) pour mettre en oeuvre un procédé selon l'une quelconque des revendications 1 à 5 pour rapporter la consommation d'énergie d'émission dans la liaison montante, ledit dispositif de station de base comprenant :

un moyen pour demander à une station mobile (UE) de rapporter conjointement une puissance d'émission et un débit binaire d'émission,
un moyen pour recevoir ledit rapport conjoint de ladite station mobile.

**10.** Dispositif de commande de station de base (RNC) pour mettre en oeuvre un procédé selon l'une quelconque des revendications 1 à 5 pour rapporter la consommation d'énergie d'émission dans la liaison descendante, ledit dispositif de commande de station de base comprenant :

un moyen pour demander à une station de base (Noeud B) de rapporter conjointement une puissance d'émission et un débit binaire d'émission, pour chaque canal physique alloué à chaque utilisateur,
un moyen pour recevoir ledit rapport joint de ladite station de base.

**11.** Procédé pour la détection de surcharge dans la liaison descendante dans un système de radiocommunication mobile à débit variable, comprenant :

dans un dispositif de commande de station de base (RNC) dudit système, l'enregistrement d'un débit binaire, tel qu'émis à une station de base (noeud B),
dans ladite station de base, le rapport conjointement audit dispositif de station de base d'une puissance d'émission et d'un débit binaire d'émission,
dans ledit dispositif de commande de station de base, la comparaison d'un débit binaire d'émission tel qu'émis à ladite station de base, avec un débit binaire d'émission tel que rapporté par ladite station de base, pour détecter une surcharge dans ladite station de base.

FIG_1

DCH1

TFI1,1    TFI1,2    TFI1,3

Transport block    Transport block    Transport block

Transmission time interval

FIG_2

TFI2,1    DCH2    TFI2,2    TFI2,3

TB    TB    TB
TB    TB
TB    TB

Transmission time interval

FIG_3

TFI3,1    TFI3,2    TFI3,3    TFI3,4    TFI3,5

DCH3

TB
TB    TB    TB    TB
TB    TB    TB    TB    TB

Transmission time interval

FIG_4

UE    UTRAN

MEASUREMENT CONTROL

MEASUREMENT REPORT
(Power, Bit rate)

FIG_5

Node B    RNC

MEASUREMENT CONTROL

MEASUREMENT REPORT
(Power, Bit rate)